# EUROPEAN PATENT SPECIFICATION

(11) **EP 0 524 558 B1**
(45) Date of publication and mention of the grant of the patent: **28.10.1998**
(21) Application number: 92112300.6
(22) Date of filing: 18.07.1992
(51) Int. Cl.: H04B 10/16, H01S 3/06

(54) **Superluminescent optical source**
Superlumineszierende optische Quelle
Source optique superluminescente

(30) Priority: 18.07.1991 US 732097
(43) Date of publication of application: 27.01.1993
(73) Proprietor: GENERAL INSTRUMENT CORPORATION, Horsham, PA 19044 (US)
(72) Inventor: Huber, David R., Warrington, Pennsylvania 18976 (US)
(74) Representative: Hoeger, Stellrecht & Partner

(56) References cited:
- EP-A- 372 907
- WO-A-91/04594
- GB-A- 2 227 359
- US-A- 4 923 279
- PATENT ABSTRACTS OF JAPAN vol. 13, no. 453 (E-831)11 October 1989 & JP-A-1 175 787 ( MATSUSHITA ELECTRIC )

## Description

The present invention relates to optical communication systems, and more particularly to a superluminescent source useful, e.g., for providing optical energy to carry information signals or to pump active optical components.

The optical communications field is expanding at a rapid pace. Telecommunication, sensors, medical and video transmission can all take advantage of optical technology, particularly where virtually unlimited bandwidth and low attenuation are beneficial. Cable television systems are one example where optical fiber technology is providing efficient and economical alternatives to prior coaxial cable distribution schemes.

Fiber optic communication systems which utilize direct detection of information signals that are modulated on a carrier do not require a coherent light source such as that produced by a laser. Lasers are used, however, because they are readily available and provide a convenient source of high intensity light. However, lasers tend to be expensive and have various operational drawbacks that render them less than optimum for use in the field.

Other light sources, such as the light emitting diode (LED) and the superluminescent diode (SLD) have shown promise as carrier generators for fiber transmission. A basic measure of the usefulness of such incoherent sources for optical communication applications is the radiance (or brightness) of the source as measured in watts of optical power radiated into a unit solid angle per unit area of the emitting surface. To be useful for fiber transmission applications, an incoherent light source must have a high radiance and operate with a narrow bandwidth. Although LEDs and SLDs are known with relatively high radiance parameters, narrow spectral widths of about 1 angstrom (Å) have not previously been disclosed.

When both spontaneous and stimulated emission occur in an LED, its output can be of narrower spectral width and higher radiance than if spontaneous emission alone exists. Such "superluminescent" devices have achieved spectral widths of 20 Å under pulsed operation with a very high pulsed driving current. SLDs with narrower spectral widths are not currently available.

EP-A-0 372 907 and WO-A-9 104 594 disclose superluminescent broadband optical sources for gyroscopes comprising:
a rare earth doped optical fiber having an input end and an output end;
means for pumping said doped fiber to cause spontaneous emission therein, said spontaneous emission having a bandwidth β;
reflector means for reflecting said spontaneous emission; and
means for optically coupling the input end of said doped fiber to said reflector means to reflect said spontaneous emission exiting the input end of said doped fiber back into said doped fiber for output from said output end.

In connection therewith it is important to know that for the gyroscope application broadband optical sources are desired as clearly mentioned in document WO-A-9 104 594 page 1, lines 10 and 11.

Starting from this desire the light sources are designed to use the broadband emission from the doped fiber and to reflect this broadband spontaneous emission back into the fiber for amplification.

This can be clearly seen from the design according to EP-A-0 372 907 which uses a mirror selected such that the reflection of the backward signal does not alter the wavelength thereof. This intent of the design is even more obvious when considering that the object of the design is to prevent loss of the backward laser signal by means of a mirror placed at one end of the fiber coupled to the coupler.

The same design is disclosed in WO-A-9 104 594 which refers to the fact that it is important to return the majority of the backward generated superfluorescence to the fiber for further amplification.

It is the object of the present invention to provide a versatile light source for use in fiber optic communication systems.

This object is solved by a superluminescent optical source according to claim 1.

Further advantageous embodiments are subject matter of claims 2 to 8.

The advantage of the superluminescent light source according to the present invention, is that a narrow line width of about 1 Å can be obtained. Such a light source is capable of providing a plurality of optical carriers for use in transmitting separate information signals over an optical communication path. Such a light source is alternatively capable of providing pump energy for use by one or more active optical devices such as optical amplifiers or lasers.

The present invention provides various embodiments of such a superluminescent optical source.

In accordance with one embodiment of the present invention, a superluminescent optical source is provided. A rare earth doped optical fiber having an input end and an output end is pumped to cause spontaneous emission. The spontaneous emission is output from said output end for use as an optical carrier to carry information signals, or for use as a pump source to pump e.g., an optical amplifier or a laser. Reflector means are provided for reflecting light over a limited bandwidth encompassing a desired wavelength of said spontaneous emission. Means are provided for optically coupling the reflector means to the input end of said doped fiber to reflect spontaneous emissions within said limited bandwidth that exit the input end of said doped fiber back into said doped fiber for output from said output end. Light outside of said limited bandwidth is not reflected back into said doped fiber.

The reflector means can comprise an optical fiber grating, such as an in-fiber grating formed using well known photorefractive techniques.

Assuming that the spontaneous emission occurring in the doped fiber has a bandwidth β, the grating is constructed to set its optical bandwidth to no more than about ten percent of the bandwidth β.
This will result in an output signal from the optical source which has a moderate bandwidth that is useful in enabling relatively high optical power output, without reaching the threshold for stimulated Brillouin scattering when carried over an optical fiber. Since Brillouin threshold is a function of the spectral density of the source, high power can be transmitted if the source has a moderate spectrum.

An optical amplifier can be coupled to the output end of said doped fiber for increasing the power provided by said optical source. For example, a thulium doped fiber amplifier can be used for this purpose.

Where an incoherent pump source is desired, optical isolator means can be coupled to the output end of the doped fiber for preventing the fiber from lasing. On the other hand, when laser operation of the source is desired, reflector means can be coupled to the output end of the doped fiber for causing said fiber to lase. In either case, the reflector (e.g., grating) at the input end of the doped fiber provides the limited bandwidth reflection necessary to achieve a desired output.

In a specific illustrated embodiment, the desired operating wavelength is about 1.46 microns and the rare earth is thulium. The pumping means pump the thulium doped fiber at a wavelength of about 0.79 microns.

Although not necessary, the optical source can comprise a multicore optical fiber. In this instance, the doped optical fiber is provided as an inner core of the multicore fiber. The pump means include an outer core of the multicore fiber for carrying pump energy to the inner core.

Further features and advantages of the present invention are disclosed in connection with several embodiments of the present invention.

In the figures:
Figure 1 is a schematic diagram of a narrow band incoherent superluminescent source in accordance with the present invention;
Figure 2 is a graphical representation of the output of the superluminescent source of Figure 1;
Figure 3 is a schematic diagram of a filter that can be used to filter the output of the superluminescent source prior to an external modulator;
Figure 4 is a schematic diagram of an alternate embodiment of the superluminescent source in which a plurality of optical carriers are generated;
Figure 5 is a schematic diagram of an embodiment of the superluminescent source which is particularly useful as an optical pump and can be configured to lase or not to lase;
Figure 6 is a schematic diagram of a superluminescent source followed by an optical fiber amplifier in accordance with the present invention; and
Figure 7 is an end view illustration of a multicore fiber containing a doped fiber inner core that can be used in accordance with the present invention.

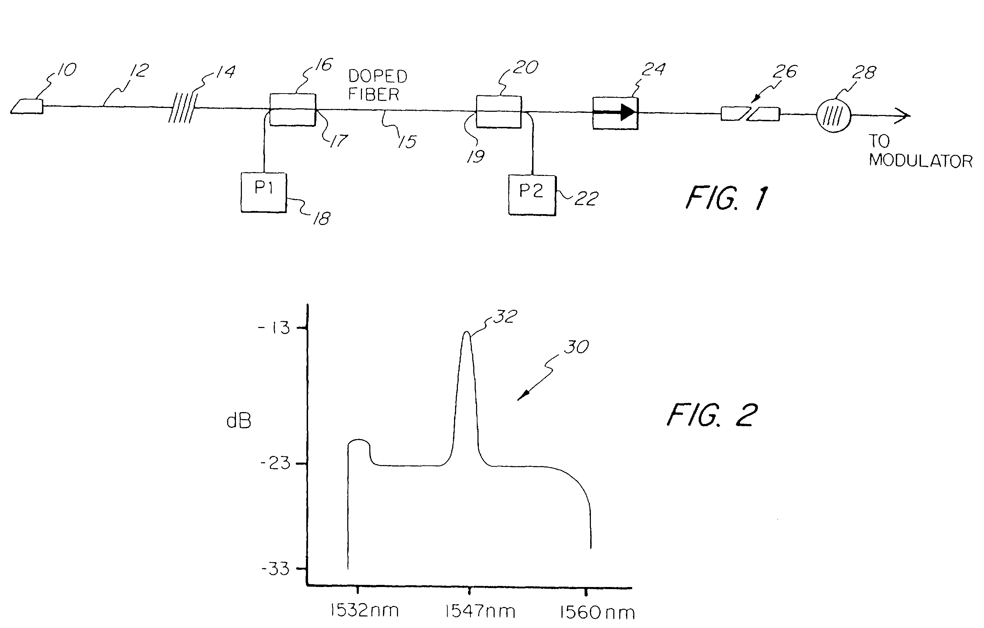

A schematic diagram of a superluminescent source that provides an incoherent optical carrier in accordance with the present invention is illustrated in Figure 1. A gain medium comprising a doped fiber 15 is pumped at an input end 17 thereof by a first pump laser 18 via a pump signal multiplexer 16. In the illustrated embodiment, the gain medium is also pumped at an output end 19 thereof by a pump laser 22 via a pump signal multiplexer 20. The pump signal multiplexers 16, 20 are conventional components well known in the art. It should be appreciated that the gain medium only has to be pumped at one end, and the pumping at both ends as shown in Figure 1 is optional.

Any solid-state laser material can be used to provide the gain medium. In a first preferred embodiment in which an optical carrier generator is provided, an erbium fiber is used for the gain medium. In a second preferred embodiment in which a pump source is provided, a thulium fiber is used for the gain medium. Fibers doped with other rare earth materials, such as neodymium, can alternatively be used for doped fiber 15. As is well known in the art, a gain medium comprising an erbium doped fiber can be used with a pump laser operating at either 980 nanometers (nm) or 1480 nm. A neodymium doped fiber will operate with an 807 nm pump laser. It has recently been demonstrated that thulium has a transition at 1460 nm. R. Allen, L. Esterowitz and I.Aggarwal, "Cascade Thulium Fiber Laser," Conference on Lasers and Electro-Optics, 1992 Technical Digest Series, Vol. 12, Paper CThQ4, May 10-15, 1992, Anaheim, California, pp. 542-543. A pump wavelength of 790 nm is suitable for a thulium optical source.

All fiber except the doped fiber 15 illustrated in Figure 1 is standard 1300 nm or 1500 nm single mode fiber if the pump laser is operating near 1480 nm. If the gain medium is pumped at 980 nm, with an erbium doped fiber 15, the fibers transporting pump light to the erbium fiber may be designed for single mode operation at 980 nm.

In accordance with the present invention, a reflector, such as a fiber grating 14, is coupled via multiplexer 16 to the input end 17 of doped fiber 15. Fiber grating 14 is a reflection device with a desired reflection band. For example, reflection grating 14 can be a grating that has a bandwidth of approximately 1 Å for reflecting light at approximately 1550 nm.

Pumping the gain medium with pump laser 18 and/or pump laser 22 will cause spontaneous emission to occur in the gain medium (doped fiber 15) as well known in the art. The spontaneous emission propagating from the gain medium toward reflector 14 will exit the input end 17 of the doped fiber via multiplexer 16. Most of the spontaneous emissions will continue past reflector 14 to optical fiber 12, and will exit the superluminescent source via a conventional slant polish connector 10. In accordance with the present invention, the spontaneous emission in the reflection band of grating 14 that exits input end 17 of doped fiber 15 will be reflected back to the gain medium. The reflected energy within the reflection band will pass back into doped fiber 15 via multiplexer 16.

Upon its return to the gain medium, the reflected energy within the reflection band of reflector 14 will be amplified. Since the gain of a doped fiber is generally on the order of 30 dB or more, this amplification will be substantial. The amplified energy will then be output from the gain medium at its output end 19. The energy output from output end 19 is coupled to an optical isolator 24 to prevent the amplified energy from reflecting back into the doped fiber 15 via multiplexer 20, so that the gain medium does not lase.

After passing through optical isolator 24, the energy exits the superluminescent source at a slant polish connector generally designated 26, for use as an incoherent optical carrier. Prior to inputting the carrier to an external modulator, it can be polarized by a conventional polarizer 28. Some types of external modulators, such as a lithium niobate Mach Zehnder modulator, require polarized light.

The optical carrier produced by the superluminescent source illustrated in Figure 1 of the present invention comprises high intensity light at a nominal bandwidth of 1 Å. The dispersion of the 1 Å wide light is minimal. Accordingly, the optical carrier is suitable for use with AM-VSB (vestigial sideband) signals, such as standard cable television signals. The carrier will also work well for digital pulse code modulation (PCM) communications, as long as extremely long transmission distances are not required. In order to extend the range of a carrier generated in accordance with the present invention, a number of stages of cascaded doped fiber optical amplifiers can be utilized.

The output power of the superluminescent source at coupler 26 is limited by the pump power of pump laser 18 and/or pump laser 22. Power conversion efficiencies on the order of 95% are achievable after correction for photon quantum efficiency.

Figure 2 illustrates the output of the superluminescent source. The output energy spectrum 30 exhibits a peak 32 at about 1547 nm for an erbium fiber implementation. Experimental data has shown that the bandwidth of the peak 32 can be designed to be extremely narrow, e.g., on the order of 13 GHz, as compared to previously known superluminescent sources. However, it may be necessary to use a somewhat broader bandwidth to maintain relative intensity noise (RIN) at an acceptable level for optical signal communication. Energy that is about 10 dB down from the peak 32 results from photons outside of the desired band which propagate toward the output end 19 of the gain medium and are amplified therein.

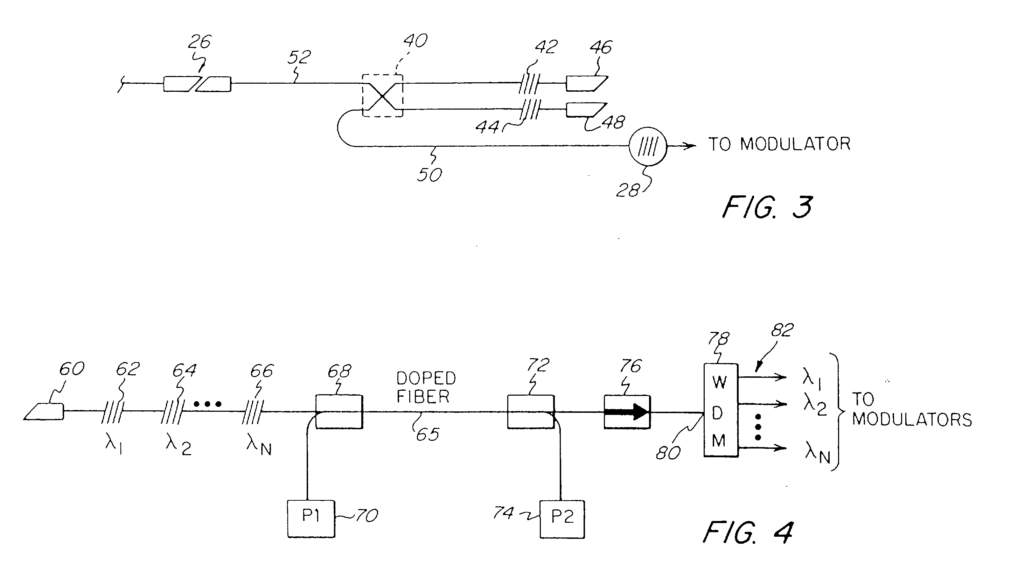

In order to improve the response of the superluminescent source of Figure 1, filtering can be provided to filter undesired spontaneous emissions that exit from the output end 19 of the gain medium. A filter such as that illustrated in Figure 3 can be used to pass only the desired spontaneous emissions in peak 32 of the response curve 30 illustrated in Figure 2. The filter of Figure 3 can be inserted between coupler 26 and polarizer 28 of Figure 1.

The filter is constructed by coupling a pair of gratings 42, 44 to a conventional 2 X 2 coupler 40. Gratings 42, 44 are matched in reflection band to grating 14 illustrated in Figure 1. This configuration can be viewed as a balanced resonant Michelson interferometer. Light outside the reflection band of gratings 42, 44 is lost via slant polish connectors 46, 48 respectively. Light within the reflection band is routed to optical fiber 50 because the balanced interferometer provides the desired phase shift for almost 100% transmission from optical fiber 52 to optical fiber 50.

Figure 4 illustrates an embodiment of the present invention in which a plurality of optical carriers are generated. The operation of the superluminescent source is the same as that discussed in connection with Figure 1. However, instead of a single grating 14 as shown in Figure 1, the embodiment of Figure 4 includes a plurality of gratings 62, 64, 66, each providing a different reflection band. Spontaneous emissions that are not reflected by reflectors 62, 64, or 66 are lost via slant polish connector 60. The reflected light is input back into doped fiber 65 via multiplexer 68. The doped fiber is pumped at one or both ends by pump lasers 70 and/or 74. Light output from the doped fiber 65 is coupled via multiplexer 72 to an optical isolator 76 that prevents the superluminescent source from lasing. A wavelength division multiplexer 78 is operated in a reverse direction, receiving the energy at its "output" terminal 80 for demultiplexing the individual carriers for output to a plurality of corresponding modulators as indicated at 82.

In the event that the external modulators receiving the carrier signals require polarized light, individual polarizers such as polarizer 28 illustrated in Figure 1 can be used. Alternatively, the doped fiber 65 can incorporate a polarizer integrally therewith as well known in the art. Another way to provide a polarized output would be to use a highly birefringent doped fiber for the gain medium, e.g., a polarizing erbium fiber. Such techniques can also be used in the embodiment of Figure 1 to eliminate the need for a separate polarizer 28.

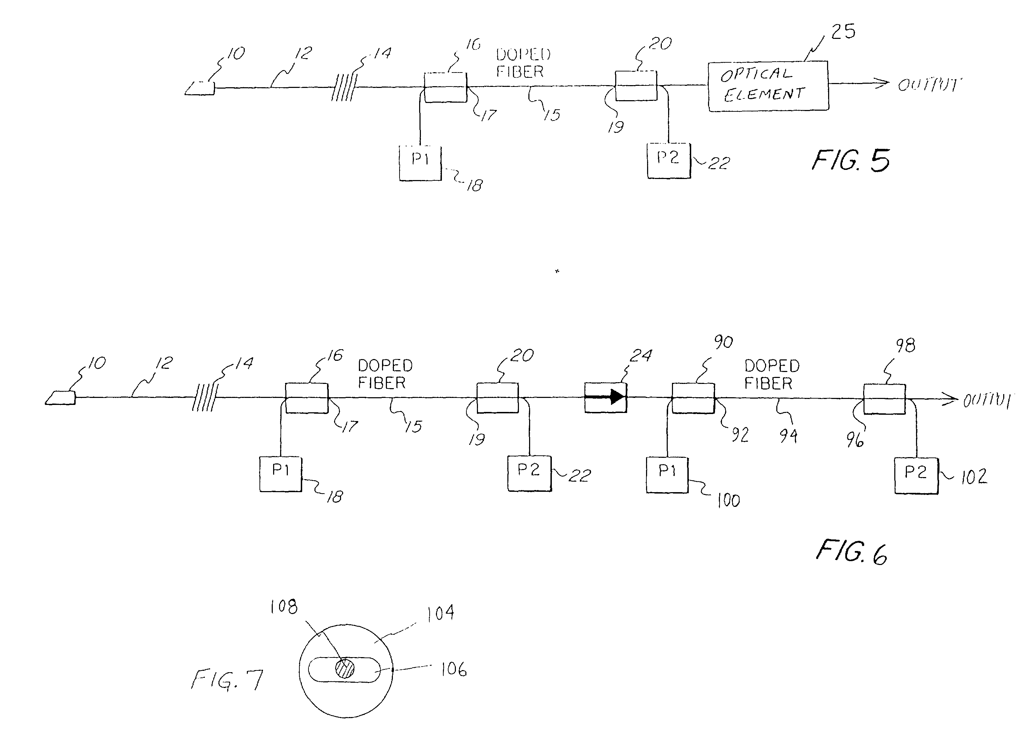

Figure 5 illustrates a superluminescent source in accordance with the present invention that is particularly well suited for use as a source of optical pump energy, e.g., for simultaneously pumping a plurality of active optical components such as optical amplifiers and/or lasers. When implemented with thulium doped fiber, the optical source outputs a wavelength of 1.46 µm which has a low fiber attenuation, i.e., exhibits a low loss as it travels through an optical fiber.

The like numbered components of Figure 5 are identical to those discussed above in connection with Figure 1, except that doped fiber 15 is advantageously a thulium doped fiber instead of an erbium fiber. An optical element 25 is provided at the output of the optical source, and can be either an optical isolator in the event that it is not desired for the doped fiber 15 to lase or a reflector if it is desired to establish a laser cavity so that doped fiber 15 will lase. For pumping at a short distance, it is desirable to run the pump source above the laser threshold so that lasing occurs to increase efficiency. The provision of a source that does not lase is required for pump energy that is to be communicated over an appreciable distance, so that the Brillouin threshold will not be reached. Stimulated Brillouin scattering is the first fiber non-linearity that results as the power in a fiber is increased.

Since Brillouin threshold is a function of pump spectral density, high power can be transmitted if the pump light has a moderately broad spectrum. Typical Brillouin gain bandwidths are 40 MHz to 100 MHz. If the optical bandwidth of the pump is significantly wider than 40 MHz to 100 MHz, the Brillouin threshold as a function of transmitted pump power can be greatly increased. In accordance with the present invention, grating 14 (e.g., a fiber grating) is used to limit the spectrum of the source, while retaining efficient power conversion. It is desirable to limit the spectrum of the superluminescent source when it is used to pump an optical amplifier, since the noise figure of an optical amplifier is dependent on the wavelength of the pump light. The source linewidth is derived from the bandwidth of grating 14. Thus, when the pump is used to pump devices a significant distance away, it is desirable to use a grating having a moderately wide optical bandwidth to keep the spectral density below the Brillouin spectrum.

To provide additional output power for the superluminescent source, a cascade arrangement can be used as shown in Figure 6. The structure of the device is identical to that illustrated in Figure 5 (where optical element 25 is an optical isolator 24), with the addition of an optical fiber amplifier in series with the output of the optical isolator. The optical fiber amplifier comprises a doped fiber 94, such as a thulium doped fiber, that is pumped by either one or both of pump sources 100, 102. The ends 92, 96 of doped fiber 94 are coupled to the pump energy by conventional optical multiplexers 90, 98, respectively.

Thulium is a four level laser system. Thus, it may be convenient to use a dual core pump configuration for the thulium doped fibers. An example of a dual core configuration is illustrated in Figure 7. Inner core 108 is the doped fiber. An outer core 106 is coupled to a pump source (e.g., pump source 18) and carries the pump energy for pumping the doped core 108. A conventional cladding 104 surrounds the outer core 106.

Those skilled in the art will appreciate that a problem that may be encountered with high power superluminescent sources is excess photon noise. One technique for eliminating such noise is disclosed in P.R. Morkel, R.I. Laming, H.O. Edwards, and D.N. Payne, "Elimination of Excess Photon Noise from Fiber Superradiant Sources", Paper CTUH76, CLEO 90, Anaheim, California, May 22, 1990.

It should now be appreciated that the present invention provides a superluminescent source for use in providing, e.g., pump energy to one or more active optical components such as optical amplifiers and lasers. The source includes a gain medium such as a thulium doped fiber and a reflector for reflecting spontaneous emissions within a predefined band from the gain medium back into the medium for amplification and output. Lasing of the optical source is prevented, if desired, by an optical isolator coupled to the output thereof. An optical amplifier can be coupled to the output of the source to increase the power thereof.

Although the invention has been described in connection with various specific embodiments, those skilled in the art will appreciate that numerous adaptations and modifications may be made thereto, without departing from the scope of the invention as set forth in the claims.

## Claims

1. A superluminescent optical source comprising:
a rare earth doped optical fiber (15,65) having an input end (17) and an output end (19);
means (18,22;70,74) for pumping said doped fiber (15,65) to cause spontaneous emission therein, said spontaneous emission having a bandwidth β;
reflector means (14) for reflecting said spontaneous emission; and
means for optically coupling the input end (17) of said doped fiber (15,65) to said reflector means (14) to reflect said spontaneous emission exiting the input end (17) of said doped fiber (15,65) back into said doped fiber (15,65) for output from said output end (19),
characterized in
that said reflector means comprise an optical fiber grating (14);
that said optical fiber grating (14) is constructed to selectively reflect said spontaneous emission within a limited bandwidth, without reflecting spontaneous emission outside of said limited bandwidth back into said doped fiber, said limited bandwidth encompassing desired wavelengths of said spontaneous emission and being set to no more than about ten percent of the bandwidth β.

2. An optical source in accordance with claim 1 further comprising:
an optical amplifier (94) coupled to the output end (19) of said doped fiber (15,65) for increasing the power provided by said optical source.

3. An optical source in accordance with claim 2 wherein said optical amplifier (94) is a thulium doped fiber amplifier.

4. An optical source in accordance with one of the preceding claims further comprising:
optical isolator means (24) coupled to the output end (19) of said doped fiber (15,65) for preventing the fiber (15,65) from lasing.

5. An optical source in accordance with one of claims 1 to 3 further comprising:
reflector means (25) coupled to the output end (19) of said doped fiber (15) for causing said fiber (15) to lase.

6. An optical source in accordance with one of the preceding claims wherein said desired wavelength is about 1.46 microns and said rare earth is thulium.

7. An optical source in accordance with claim 6 wherein said pumping means (18,22,70,74,100,102) pump said thulium doped fiber (15,65,94) at a wavelength of about 0.79 microns.

8. An optical source in accordance with claim 6 or 7 comprising a multicore optical fiber,
wherein said doped optical fiber (15,65,94) is provided as an inner core (108) of said multicore fiber and said pump means (18,22,70,74,100,102) include an outer core (106) of said multicore fiber for carrying pump energy to said inner core (108).

## Patentansprüche

1. Eine superstrahlende optische Quelle umfassend:
eine mit seltener Erde dotierte optische Faser (15, 65) umfassend ein eingangsseitiges Ende (17) und ein ausgangsseitiges Ende (19);
Mittel (18, 22; 70, 74) zum Pumpen der dotierten Faser (15, 65), um darin spontane Emission entstehen zu lassen, wobei die spontane Emission eine Bandbreite β aufweist;
Reflektormittel (14) zum Reflektieren der spontanen Emission; und
Mittel zum optischen Koppeln des eingangsseitigen Endes (17) der dotierten Faser (15, 65) mit den Reflektormitteln (14), um die aus dem eingangsseitigen Ende (17) der dotierten Faser (15, 65) austretende spontane Emission in die dotierte Faser (15, 65) zurückzureflektieren, damit sie aus dem ausgangsseitigen Ende (19) austritt,
dadurch gekennzeichnet,
daß die Reflektormittel ein optisches Fasergitter (14) umfassen;
daß das optische Fasergitter (14) so ausgebildet ist, daß es die spontane Emission innerhalb einer begrenzten Bandbreite selektiv reflektiert, ohne spontane Emission außerhalb der begrenzten Bandbreite in die dotierte Faser zurückzureflektieren, wobei die begrenzte Bandbreite erwünschte Wellenlängen der spontanen Emission umfaßt und auf nicht mehr als ungefähr 10% der Bandbreite β festgelegt ist.

2. Eine optische Quelle nach Anspruch 1 ferner umfassend:
einen optischen Verstärker (94), welcher mit dem ausgangsseitigen Ende (19) der dotierten Faser (15, 65) gekoppelt ist, um die von der optischen Quelle zur Verfügung gestellte Leistung zu erhöhen.

3. Eine optische Quelle nach Anspruch 2, wobei der optische Verstärker (94) ein thuliumdotierter Faserverstärker ist.

4. Eine optische Quelle nach einem der voranstehenden Ansprüche, ferner umfassend:
optische Isolatormittel (24), welche mit dem ausgangsseitigen Ende (19) der dotierten Faser (15, 65) verbunden sind, um die Faser (15, 65) am Lasen zu hindern.

5. Eine optische Quelle nach einem der Ansprüche 1 bis 3 ferner umfassend:
Reflektormittel (25), die mit dem ausgangsseitigen Ende (19) der dotierten Faser (15) verbunden sind, um die Faser (15) zum Lasen zu bringen.

6. Eine optische Quelle nach einem der voranstehenden Ansprüche, wobei die gewünschte Wellenlänge ungefähr 1,46 Mikron beträgt und die seltene Erde Thulium ist.

7. Eine optische Quelle nach Anspruch 6, wobei die Pumpmittel (18, 22, 70, 74, 100, 102) die thuliumdotierte Faser (15, 65, 94) bei einer Wellenlänge von ungefähr 0,79 Mikron pumpen.

8. Eine optische Quelle nach Anspruch 6 oder 7, umfassend eine optische Faser mit mehreren Kernen, wobei die dotierte optische Faser (15, 65, 94) als innerer Kern (108) der Faser mit mehreren Kernen vorgesehen ist und die Pumpmittel (18, 22, 70, 74, 100, 102) einen äußeren Kern (106) der Faser mit mehreren Kernen umfaßt, um Pumpenergie in den inneren Kern (108) zu bringen.

## Revendications

1. Source optique superluminescente, comprenant :
une fibre optique dopée à la terre rare (15, 65), présentant une extrémité d'entrée (17) et une extrémité de sortie (19),
des moyens (18, 22; 70, 74) pour pomper la fibre dopée (15, 65) afin d'y provoquer une émission spontanée, l'émission spontanée présentant une largeur de bande β,
des moyens de réflexion (14) pour réfléchir l'émission spontanée, et
des moyens pour coupler optiquement l'extrémité d'entrée (17) de la fibre dopée (15, 65) aux moyens de réflexion (14) afin de réfléchir l'émission spontanée, sortant de l'extrémité d'entrée (17) de la fibre dopée (15, 65), en retour dans ladite fibre dopée (15, 65) pour sortir par l'extrémité de sortie (19),
***caractérisée en ce que :***
les moyens de réflexion comprennent une grille à fibre optique (14) et
la grille à fibre optique (14) est construite pour réfléchir sélectivement l'émission spontanée dans une largeur de bande limitée, sans réfléchir d'émission spontanée en dehors de la largeur de bande limitée en retour dans la fibre dopée, la largeur de bande limitée renfermant des longueurs d'onde souhaitées de l'émission spontanée et étant réglée à pas plus d'approximativement dix pour-cent de la largeur de bande β.

2. Source optique suivant la revendication 1, caractérisée en ce qu'elle comprend en outre :
un amplificateur optique (94) couplé à l'extrémité de sortie (19) de la fibre dopée (15, 65) en vue d'augmenter la puissance fournie par la source optique précitée.

3. Source optique suivant la revendication 2, caractérisée en ce que l'amplificateur optique (94) est un amplificateur à fibre dopée au thulium.

4. Source optique suivant l'une des revendications précédentes, caractérisée en ce qu'elle comprend en outre :
des moyens d'isolation optique (24) couplés à l'extrémité de sortie (19) de la fibre dopée (15, 65) pour empêcher la fibre (15, 65) de rayonner.

5. Source optique suivant l'une des revendications 1 à 3, caractérisée en ce qu'elle comprend en outre :
des moyens de réflexion (25) couplés à l'extrémité de sortie (19) de la fibre dopée (15) pour amener ladite fibre (15) à rayonner.

6. Source optique suivant l'une des revendications précédentes, caractérisée en ce que la longueur d'onde souhaitée est d'approximativement 1,46 micromètres et en ce que la terre rare est du thulium.

7. Source optique suivant la revendication 6, caractérisée en ce que les moyens de pompage (18, 22, 70, 74, 100, 102) pompent la fibre dopée au thulium (15, 65, 94) à une longueur d'onde d'approximativement 0,79 micromètre.

8. Source optique suivant la revendication 6 ou 7, caractérisée en ce qu'elle comprend une fibre optique à âmes multiples, dans laquelle la fibre optique dopée (15, 65, 94) est prévue sous la forme d'une âme interne (108) de la fibre à âmes multiples et les moyens de pompage (18, 22, 70, 74, 100, 102) comprennent une âme externe (106) de la fibre à âmes multiples pour transporter de l'énergie de pompage vers l'âme interne (108).
